# EUROPÄISCHE PATENTSCHRIFT

(11) **EP 2 165 889 B1**
(45) Veröffentlichungstag und Bekanntmachung des Hinweises auf die Patenterteilung: **30.05.2018**
(21) Anmeldenummer: 09010145.2
(22) Anmeldetag: 06.08.2009
(51) Int. Cl.: B60R 13/04, F16B 5/12, F16B 21/07

(54) **VORRICHTUNG ZUM FIXIEREN EINER LEISTE**
DEVICE FOR FIXING A BAND
DISPOSITIF DE FIXATION D'UNE BAGUETTE

(30) Priorität: 19.09.2008 DE 102008048023
(43) Veröffentlichungstag der Anmeldung: 24.03.2010
(73) Patentinhaber: A. RAYMOND et Cie, 38000 Grenoble (FR)
(72) Erfinder: Regensburger, Jan, 79400 Kandern (DE); Walter, Stéphane, 68210 Ballersdorf (FR)
(74) Vertreter: König Szynka Tilmann von Renesse Patentanwälte Partnerschaft mbB

(56) Entgegenhaltungen:
- FR-A1- 2 675 547
- FR-A1- 2 731 664
- US-A- 3 481 096
- US-A1- 2002 138 956

## Beschreibung

Die Erfindung betrifft eine Vorrichtung zum Fixieren einer Leiste gemäß dem Oberbegriff des Patentanspruches 1.

Eine derartige Vorrichtung ist aus FR 2 675 547 A1 bekannt. Die vorbekannte Vorrichtung zum Fixieren einer Leiste in einem nutartig vertieften, wenigstens ein Verankerungselement aufweisenden Kanal ist mit einem Einsteckteil ausgebildet, das über mit der Leiste in Eingriff bringbare Eingriffselemente verfügt und mit Rastelementen ausgebildet ist. Weiterhin ist ein Aufnahmeteil vorhanden, das über Rastmittel verfügt, die mit den an dem Einsteckteil ausgebildeten Rastelementen zum Halten des Einsteckteiles in dem Aufnahmeteil in verschiedenen Höhenlagen zusammenwirken. Zum Verbinden des Aufnahmeteils mit dem Verankerungselement ist eine durch eine U-förmige Freimachung ausgebildete elastische Zunge vorhanden, die einen verbreiterten Kopf des Verankerungselementes hintergreift. Zum Toleranzausgleich ist ein rechtwinklig zur Längsrichtung des Aufnahmeteils ausgerichteter Aufnahmeschlitz vorhanden.

Eine weitere Vorrichtung zum Fixieren einer Leiste ist aus DE 90 00 563 U1 bekannt. Diese vorbekannte Vorrichtung zum Fixieren einer als Dachleiste für ein Kraftfahrzeug ausgebildeten Leiste in einem nutartig vertieften, ein sich in einer Längsrichtung erstreckenden Verankerungssteg ausgebildeten Verankerungselement aufweisenden Kanal in Gestalt eines Dachkanals eines Kraftfahrzeugs weist ein Einsteckteil auf, das über mit der Dachleiste in Eingriff bringbare Eingriffselemente verfügt und Rastelemente aufweist. Die Rastelemente sind stufenartig ausgebildet und an biegsamen Federfingern angeformt, so dass sie in verschiedenen Höhenlagen mit einem umgebogenen Randstreifen des Verankerungssteges in Eingriff kommen können. Durch die Elastizität der Federfinger ist diese vorbekannte Vorrichtung auch in einer rechtwinklig zu der Längsrichtung des Dachkanals ausgerichteten Querrichtung unterschiedlich positionierbar.

Aus FR 2 731 664 A1 ist eine Vorrichtung zum Fixieren einer Leiste in einem nutartig vertieften, wenigstens ein Verankerungselement aufweisenden Kanal bekannt, bei dem ein Aufnahmeteil und ein Einsteckteil über eine Anzahl von sich in Längsrichtung des Einsteckteiles und des Aufnahmeteiles erstreckenden Längsrippen miteinander in verschiedenen Höhenlagen in Eingriff bringbar sind.

Aus US-A-3,481,096 ist ein Abdeckclip bekannt, der über einen zu einer Längsrichtung schräg ausgerichteten Aufnahmeschlitz zur Aufnahme eines Verankerungselementes verfügt, um den Abdeckclip bei Verschieben in Längsrichtung in Anschlag mit einer Wand eines anderen Teiles zu bringen.

Der Erfindung liegt die Aufgabe zugrunde, eine Vorrichtung zum Fixieren einer Leiste der eingangs genannten Art anzugeben, die auch bei verhältnismäßig großen Toleranzen sowohl in einer Längsrichtung, in einer Querrichtung als auch einer Einführrichtung in der Relativlage eines in einem nutartig vertieften Kanal angeordneten Verankerungselementes oder insbesondere auch mehrerer derartiger Verankerungselemente zu einer stabilen und optisch einwandfreien Anordnung der Leiste in dem Kanal führt.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung ein Aufnahmeteil vorhanden ist, das über den schräg ausgerichteten Aufnahmeschlitz zum einen in einer rechtwinklig zu der Längsrichtung des Kanals ausgerichteten Querrichtung in verschiedenen Relativlagen positionierbar ist, zum anderen das Einsteckteil in Bezug auf das Aufnahmeteil über das Zusammenwirken der an dem Aufnahmeteil ausgebildeten Rastmittel sowie der an dem Einsteckteil ausgebildeten Rastelemente in Gestalt von Längsrippen in verschiedenen Höhenlagen positionieren läßt und überdies die an Randflügeln ausgebildeten Eingriffszungen eine zuverlässige Verbindung mit der Leiste sicherstellen, lassen sich Toleranzen in der Relativlage des oder jedes Verankerungselementes in Bezug auf den Kanal so ausgleichen, dass eine in dem Kanal angeordnete Leiste optisch einwandfrei in den Kanal eingepasst ist, auch wenn insbesondere mehrere Verankerungselemente unterschiedlich positioniert sind.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung. Es zeigen:
- Fig. 1: in einer perspektivischen Ansicht ein Ausführungsbeispiel einer erfindungsgemäßen Vorrichtung mit einem Aufnahmeteil und mit einem in der Anordnung gemäß Fig. 1 in das Aufnahmeteil eingefügten Einsteckteil,
- Fig. 2: in einer perspektivischen Ansicht das Aufnahmeteil des Ausführungsbeispieles gemäß Fig. 1,
- Fig. 3: in einer Draufsicht das Aufnahmeteil des Ausführungsbeispieles gemäß Fig. 1 und Fig. 2,
- Fig. 4: in einem Querschnitt das Aufnahmeteil gemäß Fig. 1 bis Fig. 3,
- Fig. 5: in einem Querschnitt die Anordnung eines Ausführungsbeispieles der Erfindung gemäß Fig. 1 in einem als Dachkanal eines Kraftfahrzeugs ausgebildeten Kanal, wobei das Einsteckteil mit einer als Dachleiste ausgebildeten Leiste in Eingriff und in einer Vormontageanordnung in einem Abstand von dem Aufnahmeteil angeordnet ist, und
- Fig. 6: die Anordnung gemäß Fig. 5 mit dem Einsteckteil in einer in das Aufnahmeteil eingefügten Endmontageanordnung.

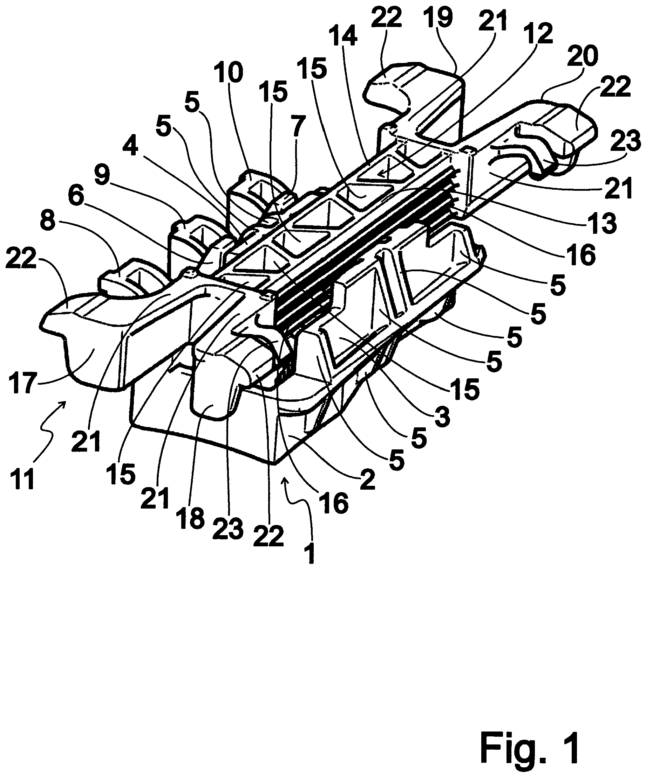

Fig. 1 zeigt in einer perspektivischen Ansicht ein Ausführungsbeispiel einer erfindungsgemäßen Vorrichtung zum Fixieren einer in Fig. 1 nicht dargestellten Leiste in einem in Fig. 1 nicht dargestellten nutartig vertieften, wenigstens ein Verankerungselement aufweisenden Kanal. Die Vorrichtung gemäß Fig. 1 verfügt über ein Aufnahmeteil 1 aus einem hartelastischen Kunststoffmaterial, das mit einer Bodenwanne 2 mit einer rechteckförmigen Grundfläche ausgebildet ist. An der in der Darstellung gemäß Fig. 1 dem Betrachter zugewandten Oberseite der Bodenwanne 2 verfügt das Aufnahmeteil 1 über sich in Längsrichtung erstreckende Seitenwände 3, 4. Die Bodenwanne 2 und die Seitenwände 3, 4 sind über außenseitig angeordnete Stabilisierungsstreben 5 gegen Aufbiegen versteift.

Benachbart einer Seitenwand 4, die in der Darstellung gemäß Fig. 1 dem Betrachter abgewandt ist, sind an der Bodenwanne 2 federnd angeformte Gegensockel 6, 7 vorhanden, die in einem Abstand von dieser Seitenwand 4 positioniert sind. Weiterhin dieser Seitenwand 4 gegenüberliegend sind eine Anzahl von Klemmsockel 8, 9, 10 vorhanden, die ebenfalls an der Bodenwanne 2 in einem gegenüber dem Abstand der Gegensockel 6, 7 größeren Abstand elastisch federnd angeformt sind.

Weiterhin verfügt die erfindungsgemäße Vorrichtung nach dem Ausführungsbeispiel gemäß Fig. 1 über ein Einsteckteil 11, das mit einem quaderförmigen, in Längsrichtung gestreckten Mittelstück 12 ausgebildet ist. Das zwischen den Seitenwänden 3, 4 in Längsrichtung verschiebbare Mittelstück 12 verfügt über zwei einander gegenüberliegende Außenwände 13, 14, die über eine Anzahl von alternierend zueinander schräg gestellten Innenrippen 15 gegeneinander versteift sind. An den voneinander abgewandten Außenseiten der Außenwände 13, 14 sind an den Außenwänden 13, 14 eine Anzahl von sich in Längsrichtung erstreckenden, in einem Rastabstand parallel zueinander verlaufenden Längsrippen 16 als Eingriffselemente ausgebildet.

An den stirnseitigen Enden des Mittelstückes 12 verfügt das Einsteckteil 11 des Ausführungsbeispieles gemäß Fig. 1 jeweils über zwei sich in Längsrichtung erstreckende und in einem Abstand voneinander angeordnete Randflügel 17, 18, 19, 20, die jeweils an einem Ende eines sich von dem Mittelstück 12 weg erstreckenden, elastisch federnden Federabschnitt 21 eine in Querrichtung nach außen abstehende Eingriffzunge 22 tragen. Weiterhin sind an den auf einer Längsseite liegenden Randflügeln 17, 20, die in der Darstellung gemäß Fig. 1 dem Betrachter zugewandt sind, außenseitig über die jeweiligen Eingriffszungen 22 überstehende, elastisch federnde Spannzungen 23 angeformt.

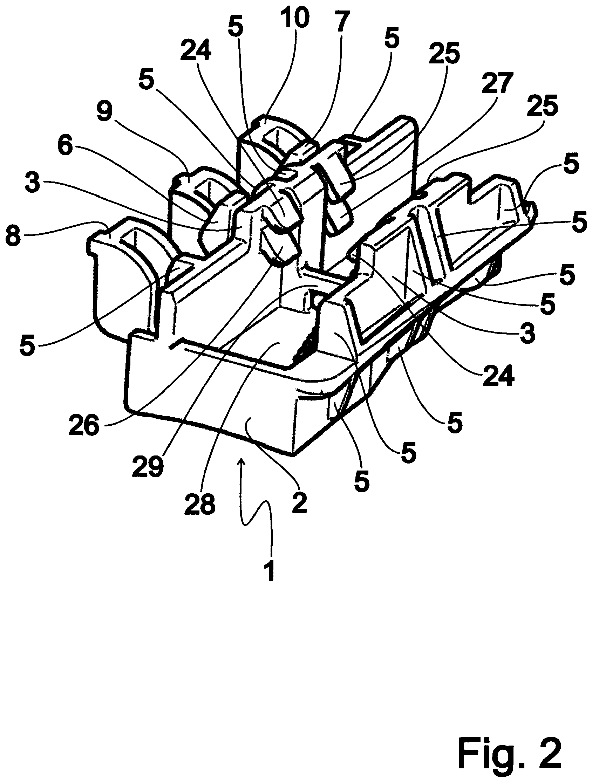

Fig. 2 zeigt in einer perspektivischen Ansicht das Aufnahmeteil 1 des in Fig. 1 dargestellten Ausführungsbeispieles einer erfindungsgemäßen Vorrichtung. Aus Fig. 2 ist ersichtlich, dass an den innen liegenden, aufeinander zu weisenden Seiten der Seitenwände 3 jeweils eine Anzahl von Rastnasen 24, 25, 26, 27 ausgebildet sind, die jeweils in Richtung der gegenüberliegenden Seitenwand 3, 4 vorstehen und sich schräg in Richtung einer Bodenwand 28 der Bodenwanne 2 erstrecken. Dabei sind die an einer Seitenwand 3, 4 angeordneten Rastnasen 24, 25, 26, 27 in einer sich rechtwinklig zur Längsrichtung des Aufnahmeteils 1 erstreckenden Einführrichtung miteinander fluchtend in einem einem Vielfachen des Rastabstandes der Längsrippen 16 entsprechenden Rastnasenabstand versetzt voneinander angeordnet. Schließlich lässt sich Fig. 2 entnehmen, dass in etwa in der Mitte der Bodenwanne 2 ein sich quer zur Längsrichtung erstreckender Versteifungssteg 29 ausgebildet ist, der sich in einem Abstand von der Bodenwand 28 zwischen den Seitenwänden 3, 4 erstreckt.

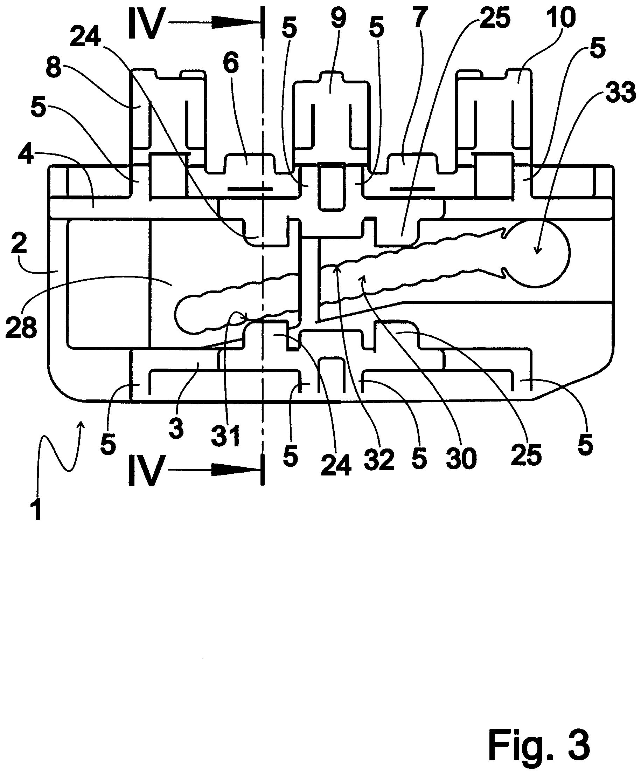

Fig. 3 zeigt das Aufnahmeteil 1 des Ausführungsbeispieles gemäß Fig. 1 und Fig. 2 in einer Draufsicht auf die Bodenwand 28. Aus Fig. 3 ist ersichtlich, dass in die Bodenwand 28 ein Aufnahmeschlitz 30 eingebracht ist, der sich schräg zur Längsrichtung des Aufnahmeteiles 1 zwischen den Seitenwänden 3, 4 erstreckt. Bei diesem Ausführungsbeispiel ist jede Randseite des Aufnahmeschlitzes 30 mit einer aus einer Abfolge von Erhebungen und Vertiefungen gebildeten Riffelstruktur 31, 32 ausgestattet. An einem Ende des Aufnahmeschlitzes 30 ist in die Bodenwand 28 eine gegenüber der Breite des Aufnahmeschlitzes 30 im Durchmesser größere Einsatzausnehmung 33 eingebracht.

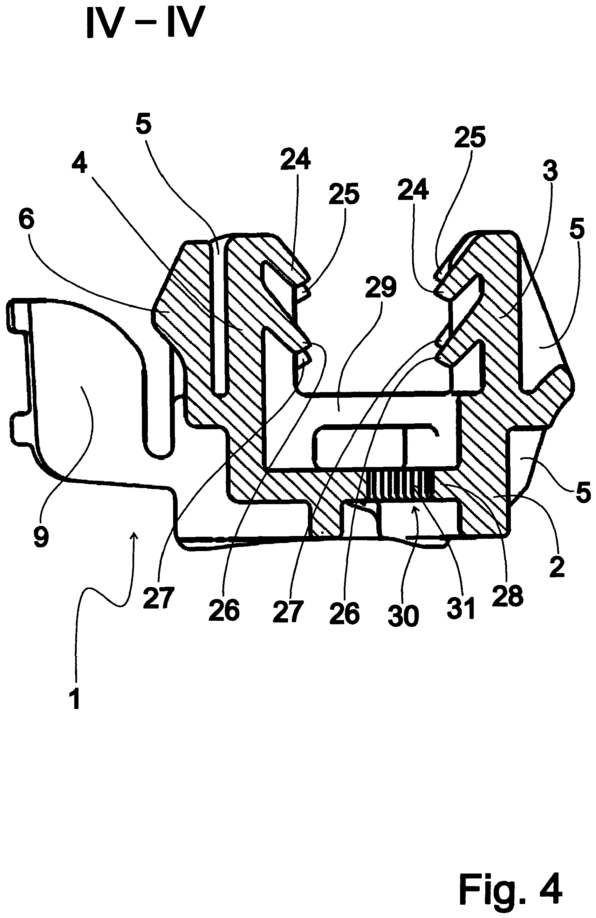

Fig. 4 zeigt das Aufnahmeteil 1 in einem Querschnitt entlang der Linie IV-IV in Fig. 3. Aus Fig. 4 ist ersichtlich, dass die Paare von in Einführrichtung miteinander fluchtenden Rastnasen 24, 26; 25, 27 einer Seitenwand 3, 4 in Einführrichtung gegenüber den direkt gegenüberliegenden entsprechenden Paaren 24, 26; 25, 27 hier um den halben Abstand der Längsrippen 16 des Einsteckteiles 11, also um die Hälfte des Rastabstandes, zueinander versetzt sind, während die diametral einander gegenüberliegenden Paare von Rastnasen 24, 26; 25, 27 in der gleichen Höhenlage, das heißt im gleichen Abstand von der Bodenwand 28 beziehungsweise von den der Bodenwand 28 abgewandten Enden der Seitenwände 3, 4, angeordnet sind.

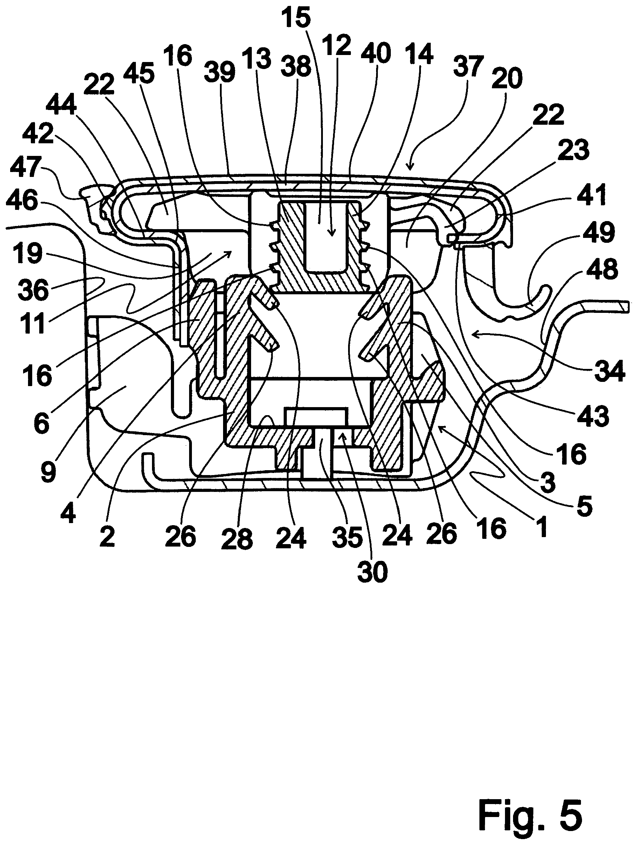

Fig. 5 zeigt das Ausführungsbeispiel gemäß Fig. 1 bis Fig. 4 in einer Vormontageanordnung in einem als Dachkanal 34 eines Kraftfahrzeuges ausgebildeten Kanals, wobei das Aufnahmeteil 1 mit einem durch den Aufnahmeschlitz 30 durchgreifenden Stehbolzen 35 als Verankerungselement unter Auflage eines gegenüber einem Bolzenschaft im Querschnitt vergrößerten Bolzenkopf in Eingriff ist und auf der Bodenwand 28 aufliegt. Dabei wurde das Aufnahmeteil 1 nach Einführen des Stehbolzens 35 durch die Einsatzausnehmung 33 so weit in Längsrichtung des Dachkanals 34 verschoben, dass die Klemmsockel 8, 9, 10 mit einer gewissen Vorspannung an einer Innenwand 36 des Dachkanals 34 anliegen. Dadurch ist das Aufnahmeteil 1 in dem Dachkanal 34 unter Toleranzausgleich der Position des Stehbolzens 35 in Querrichtung fixiert.

Durch die Riffelstrukturen 31, 32, die an ihren Engstellen dem Aufnahmeschlitz 30 eine Breite verleihen, die geringfügig kleiner als der Durchmesser des Bolzenschaftes des Stehbolzens 35 ist, erfolgt weiterhin eine Sicherung des Aufnahmeteiles 1 gegen ein unbeabsichtigtes Verschieben in Längsrichtung des Dachkanals 34.

In der Darstellung gemäß Fig. 5 ist das Einsteckteil 11 mit einer Dachleiste 37 in Eingriff, die aus einem endseitig um 180 Grad umgebogenen biegesteifen Blechkern 38 und aus einer den Blechkern 38 außenseitig umgebenden Abdeckung 39 aus einer Weichkomponente gebildet ist. Die Dachleiste 37 weist einen flachen Deckabschnitt 40 auf, an den sich randseitig jeweils ein Umbiegeabschnitt 41, 42 anschließt.

An einen Umbiegeabschnitt 41 ist ein relativ kurzer Abschlussabschnitt 43 angeformt, der in etwa parallel zu dem Deckabschnitt 40 ausgerichtet ist. Zum Fixieren der Vorrichtung in Längsrichtung der Dachleiste 37 greift eine der Spannzungen 23 in eine in den Abschlussabschnitt 43 eingebrachte, zu der inneren Randseite offene Ausnehmung ein, während die andere Spannzunge 23 eingriffsfrei an der inneren Randseite des Abschlussabschnittes 43 anliegt. Die den Spannzungen 23 benachbarten Eingriffszungen 22 sind zwischen dem Deckabschnitt 40 und dem Abschlussabschnitt 43 angeordnet.

An dem dem Abschlussabschnitt 43 gegenüberliegenden Umbiegeabschnitt 42 ist ein Zwischenabschnitt 44 der Dachleiste 37 ausgebildet, an den wiederum sich ein Abkantabschnitt 45 anschließt, der von dem Deckabschnitt 40 weg weisend um etwa 90 Grad umgebogen ist und einen somit in etwa rechtwinklig zu dem Deckabschnitt 40 ausgerichteten Anlageabschnitt 46 trägt. Die Gegensockel 6, 7 liegen mit einer gewissen Vorspannung an dem Anlageabschnitt 46 an, so dass zusammen mit der vorspannenden Wirkung der Spannzungen 23 die Dachleiste 37 fest mit dem Einsteckteil 11 verbunden ist.

Im Bereich des mit dem Zwischenabschnitt 44 verbundenen Umbiegeabschnittes 42 ist außenseitig eine Dichtlippe 47 angebracht. Im Bereich des Abschlussabschnittes 43 verfügt die Dachleiste 37 über einen einer weiteren Innenwand 48 des Dachkanals 34 zugewandte umgebogene Dichtschürze 49.

In der Darstellung gemäß Fig. 5 ist das Einsteckteil 11 mit dem Mittelstück 12 auf die der Bodenwand 28 abgewandten Rastnasen 24, 25 aufgelegt, so dass in dieser Vormontageanordnung die Dachleiste 37 über dem Dachkanal 34 erhaben angeordnet ist.

Durch die relative Positionierbarkeit des Einsteckteiles 11 in Bezug auf das Aufnahmeteil 1 in Längsrichtung reicht eine verhältnismäßig grobe Positionierung des Einsteckteiles 11 in der Dachleiste 37 aus, wobei das Einsteckteil 11 bei einem Anordnen außerhalb des im Wesentlichen durch die Länge des Mittelstückes 12 bestimmten Toleranzbereiches in Längsrichtung verhältnismäßig einfach wieder in den Toleranzbereich hinein verschoben werden kann.

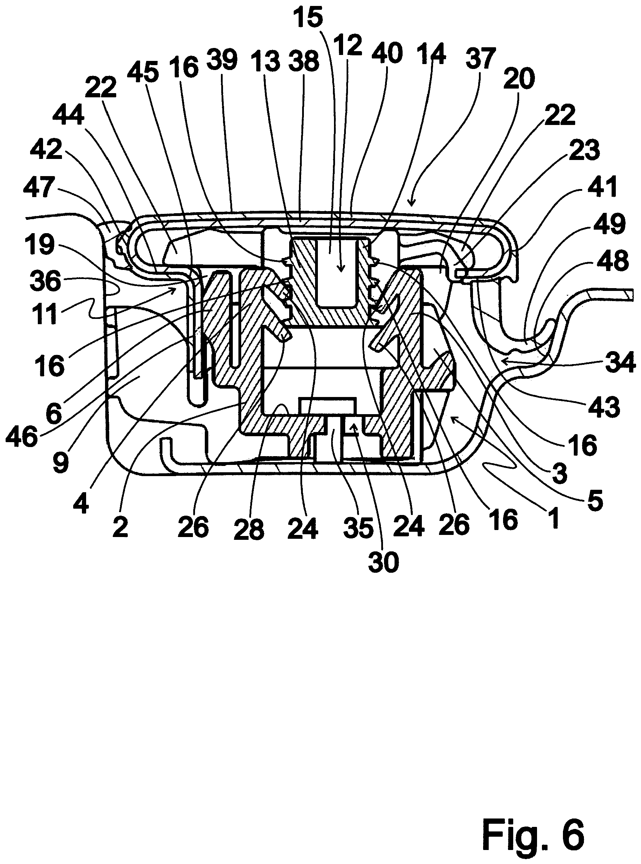

Fig. 6 zeigt die Anordnung gemäß Fig. 5 mit dem Einsteckteil 11 in einer in das Aufnahmeteil 1 eingefügten Endmontageanordnung, in der die Dachleiste 37 den Dachkanal 34 abschließt. In der Endmontageanordnung greifen Rastnasen 24, 25, 26, 27 in Abhängigkeit der Einstecktiefe des Mittelstückes 12 zwischen die Seitenwände 3, 4 wenigstens paarweise zwischen die Längsrippen 16 ein, so dass das Einsteckteil 11 wenigstens von einer Rastnase 24, 25, 26, 27 jeder Seitenwand 3, 4 gehalten ist. Durch den paarweisen Höhenversatz der Rastnasen 24, 25, 26, 27 um den halben Rastabstand der Längsrippen 16 ist dabei eine sehr genaue Einstellbarkeit der Höhenlage der Dachleiste 37 geschaffen. In der Endmontageanordnung liegen die Dichtlippe 47 und die Dichtschürze 49 an den Innenwänden 36, 48 des Dachkanals 34 an, wobei durch die federnde Elastizität der Gegensockel 6, 7 sowie der Spannzungen 23 in Querrichtung des Dachkanals 34 ein selbsttätiges Ausrichten der Dachleiste 37 in Querrichtung des Dachkanals 34 geschaffen ist.

## Patentansprüche

1. Vorrichtung zum Fixieren einer Leiste (37) in einem nutartig vertieften, wenigstens ein Verankerungselement (35) aufweisenden Kanal (34) mit einem Einsteckteil (11), das über mit der Leiste (37) in Eingriff bringbare Eingriffselemente (22) verfügt und mit Rastelementen (16) ausgebildet ist, wobei ein Aufnahmeteil (1) vorhanden ist, das über Rastmittel (24, 25, 26, 27) verfügt, die mit den an dem Einsteckteil (11) ausgebildeten Rastelementen (16) zum Halten des Einsteckteiles (11) in dem Aufnahmeteil (1) in verschiedenen Höhenlagen zusammenwirken, und das mit einem Aufnahmeschlitz (30) ausgebildet ist, in den das Verankerungselement (35) einfügbar ist, **dadurch gekennzeichnet, dass** der Aufnahmeschlitz (30) zur Längsrichtung des Aufnahmeteiles (1) schräg ausgerichtet ist, so dass das Aufnahmeteil (1) bei Verschieben in Längsrichtung in einer rechtwinklig zu der Längsrichtung des Kanals (34) ausgerichteten Querrichtung in verschiedenen Relativlagen positionierbar ist, dass die Rastelemente durch eine Anzahl von Längsrippen (16) gebildet sind, die sich in Längsrichtung des Einsteckteiles (11) erstrecken und parallel zueinander angeordnet sind und dass an dem Einsteckteil (11) Randflügel (17, 18, 19, 20) ausgebildet sind, die nach außen abstehende Eingriffszungen (22) aufweisen.

2. Vorrichtung nach Anspruch 1, **dadurch gekennzeichnet, dass** das Einsteckteil (11) ein quaderförmiges Mittelstück (12) aufweist, an dessen Außenwänden (13, 14) die Längsrippen (16) ausgebildet sind.

3. Vorrichtung nach Anspruch 2, **dadurch gekennzeichnet, dass** an zwei auf einer Längsseite des Einsteckteiles (11) liegenden Randflügeln (18, 20) elastisch federnde Spannzungen (23) vorhanden sind, die nach außen über die Eingriffszungen (22) überstehen.

4. Vorrichtung nach einem der Ansprüche 1 bis 3, **dadurch gekennzeichnet, dass** das Aufnahmeteil (1) zwei einander gegenüberliegende Seitenwände (3, 4) aufweist, an denen die Rastmittel (24, 25, 26, 27) ausgebildet sind.

5. Vorrichtung nach Anspruch 4, **dadurch gekennzeichnet, dass** die Rastmittel als in Richtung der gegenüberliegenden Seitenwand (3, 4) vorstehende, sich schräg in Richtung einer Bodenwand (28) des Aufnahmeteiles (1) erstreckende Rastnasen (24, 25, 26, 27) ausgebildet sind.

6. Vorrichtung nach Anspruch 5, **dadurch gekennzeichnet, dass** an jeder Seitenwand (3, 4) wenigstens vier Rastnasen (24, 25, 26, 27) angeordnet sind, wobei Paare von Rastnasen (24, 26; 25, 27) in einer zu der Längsrichtung rechtwinkligen Einführrichtung versetzt zueinander angeordnet sind.

7. Vorrichtung nach Anspruch 6, **dadurch gekennzeichnet, dass** der Abstand zwischen in Einführrichtung aufeinanderfolgenden Paaren von Rastnasen (24, 26; 25, 27) einem Vielfachen des Abstandes der Längsrippen (16) entspricht.

8. Vorrichtung nach Anspruch 7, **dadurch gekennzeichnet, dass** Paare von an einer Seitenwand (3, 4) angeordneten, in Einführrichtung aufeinanderfolgenden Paaren von Rastnasen (24, 26; 25, 27) um den halben Abstand der Längsrippen (16) zueinander versetzt angeordnet sind.

9. Vorrichtung nach Anspruch 8, **dadurch gekennzeichnet, dass** schräg einander gegenüberliegende Paare von an verschiedenen Seitenwänden (3, 4) angeordneten, in Einführrichtung aufeinander folgenden Paaren von Rastnasen (24, 26; 25, 27) die gleiche Höhenlage aufweisen.

10. Vorrichtung nach einem der Ansprüche 1 bis 9, **dadurch gekennzeichnet, dass** der Aufnahmeschlitz (30) an wenigstens einer Randseite eine Riffelstruktur (31, 32) mit einer Abfolge von Erhebungen und Vertiefungen aufweist.

## Claims

1. Device for fixing a strip (37) in a grooved channel (34) having at least one anchoring element (35) with an insertion part (11) which has engaging members (22) which can engage with the strip (37) and is formed with latching elements (16), wherein a receiving part (1) is present which has latching means (24, 25, 26, 27) that interact with the latching elements (16) formed on the insertion part (11) for holding the insertion part (11) in the receiving part (1) at different heights, and which is formed with a receiving slot (30) into which the anchoring element (35) can be fitted, **characterised in that** the receiving slot (30) is oriented obliquely to the longitudinal direction of the receiving part (1), so that the receiving part (1), when moved longitudinally in a transverse direction oriented at right angles to the longitudinal direction of the channel (34), can be positioned in different relative positions, that the latching elements are formed by a number of longitudinal ribs (16) which extend in the longitudinal direction of the insertion part (11) and are arranged parallel to one another, and that formed on the insertion part (11) are edge wings (17, 18, 19, 20) which have outwardly projecting engagement tabs (22).

2. Device according to claim 1, **characterised in that** the insertion part (11) has a cuboidal centre piece (12), on the outer walls (13, 14) of which are formed the longitudinal ribs (16).

3. Device according to claim 2, **characterised in that** on two of the edge wings (18, 20) located on a longitudinal side of the insertion part (11) are elastic resilient clamping tongues (23) which protrude outwardly over the engaging tongues (22).

4. Device according to any of claims 1 to 3, **characterised in that** the receiving part (1) has two opposing side walls (3, 4) on which are formed the latching means (24, 25, 26, 27).

5. Device according to claim 4, **characterised in that** the latching means are formed as latching lugs (24, 25, 26, 27) projecting in the direction of the opposite side wall (3, 4) and extending obliquely in the direction of a base wall (28) of the receiving part (1).

6. Device according to claim 5, **characterised in that** on each side wall (3, 4) are arranged at least four latching lugs (24, 25, 26, 27), with pairs of latching lugs (24, 26; 25, 27) being arranged offset from one another in an insertion direction at right angles to the longitudinal direction.

7. Device according to claim 6, **characterised in that** the distance between pairs of latching lugs (24, 26; 25, 27) following one another in the insertion direction is equal to a multiple of the distance between the longitudinal ribs (16).

8. Device according to claim 7, **characterised in that** pairs of pairs of latching lugs (24, 26; 25, 27) arranged on a side wall (3, 4) following each other in the direction of insertion are arranged offset from each other by half the distance between the longitudinal ribs (16).

9. Device according to claim 8, **characterised in that** obliquely opposite pairs of pairs of latching lugs (24, 26; 25, 27) arranged on different side walls (3, 4) following each other in the direction of insertion are at the same height.

10. Device according to any of claims 1 to 9, **characterised in that** the receiving slot (30) on at least one edge side has a ripple structure (31, 32) with a sequence of peaks and depressions.

## Revendications

1. Dispositif pour fixer une barre (37) dans un canal (34) creusé en forme de rainure, présentant au moins un élément d'ancrage (35), avec une pièce mâle (11), qui dispose d'éléments de prise (22) pouvant être engagés avec la barre (37) et qui est formé d'éléments d'encliquetage (16), une pièce femelle (1) étant présente, ladite pièce femelle dispose de moyens d'encliquetage (24, 25, 26, 27) qui interagissent dans différentes positions en hauteur avec les éléments d'encliquetage (16) formés sur la pièce mâle (11) pour maintenir la pièce mâle (11) dans la pièce femelle (1), et qui est formé d'une fente de réception (30) dans laquelle l'élément d'ancrage (35) peut être inséré, **caractérisé en ce que** la fente de réception (30) est orientée inclinée par rapport au sens longitudinal de la pièce femelle (1) de sorte que la pièce femelle (1) puisse être positionnée dans différentes positions relatives lors d'un déplacement dans le sens longitudinal dans un sens transversal à angle droit par rapport au sens longitudinal du canal (34), **en ce que** les éléments d'encliquetage sont formés d'un nombre de rainures longitudinales (16) qui s'étendent dans le sens longitudinal de la pièce mâle (11) et sont disposées parallèlement les unes aux autres, et **en ce que** des ailes périphériques (17, 18, 19, 20) sont formées au niveau de la pièce mâle (11), lesdites ailes périphériques présentent des languettes de contact (22) faisant saillie vers l'extérieur.

2. Dispositif selon la revendication 1, **caractérisé en ce que** la pièce mâle (11) présente une pièce médiane (12) parallélépipédique sur les parois extérieures (13, 14) de laquelle sont formées les rainures longitudinales (16).

3. Dispositif selon la revendication 2, **caractérisé en ce que** des languettes de serrage (23) à ressort élastique, faisant saillie vers l'extérieur au-dessus des languettes de contact (22), sont présentes sur deux ailes périphériques (18, 20) sur un côté longitudinal de la pièce mâle (11).

4. Dispositif selon l'une quelconque des revendications 1 à 3, **caractérisé en ce que** la pièce femelle (1) présente deux parois latérales (3, 4) opposées sur lesquelles sont formés les moyens d'encliquetage (24, 25, 26, 27).

5. Dispositif selon la revendication 4, **caractérisé en ce que** les moyens d'encliquetage sont formés comme des nez d'encliquetage (24, 25, 26, 27) saillant en direction de la paroi latérale (3, 4) opposée et s'étendant obliquement dans la direction d'une paroi de fond (28) de la pièce femelle (1).

6. Dispositif selon la revendication 5, **caractérisé en ce qu'**au moins quatre nez d'encliquetage (24, 25, 26, 27) sont disposés sur chaque paroi latérale (3, 4), les paires de nez d'encliquetage (24, 26 ; 25, 27) étant disposées décalées les unes des autres dans un sens d'introduction rectangulaire par rapport au sens longitudinal.

7. Dispositif selon la revendication 6, **caractérisé en ce que** l'espace entre les paires de nez d'encliquetage (24, 26 ; 25, 27) successives dans le sens d'introduction correspond aux multiples de l'espace entre les rainures longitudinales (16).

8. Dispositif selon la revendication 7, **caractérisé en ce que** les paires de paires de nez d'encliquetage (24, 26 ; 25, 27) successives dans le sens d'introduction disposées sur une paroi latérale (3, 4) sont disposées décalées les unes des autres d'une demi fois l'espace entre les rainures longitudinales (16).

9. Dispositif selon la revendication 8, **caractérisé en ce que** les paires opposées obliquement de paires de nez d'encliquetage (24, 26 ; 25, 27) successives dans le sens d'introduction disposées sur différentes parois latérales (3, 4) présentent la même position en hauteur.

10. Dispositif selon l'une quelconque des revendications 1 à 9, **caractérisé en ce que** la fente de réception (30) présente un cannelage (31, 32) sur au moins un côté périphérique avec une succession de saillies et de creux.
